# EUROPÄISCHE PATENTANMELDUNG

(11) **EP 3 715 981 A1**
(43) Veröffentlichungstag der Anmeldung: **30.09.2020**
(21) Anmeldenummer: 19165406.0
(22) Anmeldetag: 27.03.2019
(51) Int. Cl.: G05B 19/418, G06F 21/64, H04L 9/32

(54) **VERFAHREN UND STEUERSYSTEM ZUM STEUERN EINER AUSFÜHRUNG VON TRANSAKTIONEN**

(71) Anmelder: Siemens Aktiengesellschaft, 80333 München (DE)
(72) Erfinder: ASCHAUER, Hans, 81829 München (DE); BOGNER, Andreas, 81829 München (DE); DICHTL, Markus, 80636 München (DE); WENDA, Ingo, 86156 Augsburg (DE)

(57) **Zusammenfassung**

Die Erfindung betrifft ein Steuersystem, mit dem beispielsweise die Ausführung von Smart-Contracts in Blockketten verbessert werden kann.

## Beschreibung

Die Erfindung bezieht sich auf ein Verfahren und ein Steuersystem zum Steuern einer Ausführung von Transaktionen.

Nachfolgend werden Aspekte der Erfindung erläutert.

Gemäß einem ersten Aspekt betrifft die Erfindung ein Steuersystem aufweisend:
- ein Speichermodul, wobei
   ∘ das Speichermodul zum Speichern von mindestens einer Transaktion (kann z. B. auch als Nutztransaktion bezeichnet werden) und/oder mindestens einer Ausführungssteuerungstransaktion und/oder mindestens einer Voraussetzungstransaktion eingerichtet ist;
- ein Zuordnungsmodul, wobei
   ∘ das Zuordnungsmodul dazu eingerichtet ist, der Transaktion die Ausführungssteuerungstransaktion und/oder die Voraussetzungstransaktion zuzuordnen,
   ∘ die Ausführungssteuerungstransaktion eine Ausführung der Transaktion durch das Steuersystem bei einem Einhalten von Voraussetzungen der Voraussetzungstransaktion steuert.

Das Steuersystem kann beispielsweise mittels einer Netzwerk-Applikation und/oder einem verteilten Datenbanksystem und/oder einer Blockkette realisiert sein. Das Steuersystem kann beispielsweise auch eine Netzwerk-Applikation oder ein verteiltes Datenbanksystem oder eine Blockkette sein oder als solche realisiert sein. Beispielsweise können das Speichermodul und/oder das Zuordnungsmodul mittels einer Netzwerk-Applikation und/oder einem verteilten Datenbanksystem und/oder einer Blockkette realisiert sein. Beispielsweise können eine Netzwerk-Applikation und/oder ein verteiltes Datenbanksystem und/oder eine Blockkette das Speichermodul und/oder das Zuordnungsmodul umfassen.

Die Technologie von Blockketten (engl. Blockchains) bzw. "Distributed Ledgers" ist aktuell eine intensiv diskutierte Technologie, die insbesondere als verteiltes Datenbanksystem oder als Netzwerk-Applikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, IoT-Geräte Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems und/oder einer Netzwerk-Applikation sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw.

Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerk-Applikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerk-Applikation) sein, eine Transaktionsprüfsumme eines Datenblocks mit den entsprechenden Daten (des verteilten Datenbanksystems/der Netzwerk-Applikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank/Netzwerk-Applikation, welche die Daten umfasst) umfassen. Die entsprechenden Daten könnten dann beispielsweise auch in einer weiteren Transaktion eines weiteren Datenblocks des verteilten Datenbanksystems/der Netzwerk-Applikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems/der Netzwerk-Applikation möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerk-Applikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems/einer Netzwerk-Applikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerk-Applikation) verweisen bzw. diese referenzieren [1] [4] [5] .

Unter "Einfügen in das verteilte Datenbanksystem/die Netzwerk-Applikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems/einer Netzwerk-Applikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems/der Netzwerk-Applikation verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockchain as a Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerk-Applikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Blockkette (engl. Blockchain) verstanden werden. Eine Transaktion kann insbesondere einen Programmcode umfassen, der beispielsweise einen Smart Contract realisiert. Beispielsweise kann im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. einen Smart-Contract und/oder die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems/der Netzwerk-Applikation) oder die entsprechende Transaktion des verteilten Datenbanksystems/der Netzwerk-Applikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem/die Netzwerk-Applikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem/die Netzwerk-Applikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turingvollständig sind. Der Programmcode wird vorzugsweise durch die Infrastruktur des verteilten Datenbanksystems/der Netzwerk-Applikation ausgeführt [4][5]. Dabei wird beispielsweise eine virtuelle Maschine durch die Infrastruktur des verteilten Datenbanksystems (oder der Netzwerk-Applikation) realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems/der Netzwerk-Applikation (z. B. eine Blockkette) gespeichert, beispielsweise in einem Datenblock des verteilten Datenbanksystems (oder der Netzwerk-Applikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem/der Netzwerk-Applikation verstanden werden, wobei beispielsweise die entsprechende Infrastruktur des verteilten Datenbanksystems/der Netzwerk-Applikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichtete Schleifen im Graphen gibt.

Bei dem verteilten Datenbanksystem/der Netzwerk-Applikation kann es sich beispielsweise um ein öffentliches verteiltes Datenbanksystem/eine ein öffentliche Netzwerk-Applikation (z. B. eine öffentliche Blockkette) oder ein geschlossenes (oder privates) verteiltes Datenbanksystem/eine geschlossene Netzwerk-Applikation (z. B. eine private Blockkette) handeln.

Handelt es sich beispielsweise um ein öffentliches verteiltes Datenbanksystem/eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem/der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem/der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem/der Netzwerk-Applikation beitreten zu können bzw. von diesem akzeptiert zu werden.

Bei einem verteilten Datenbanksystem/der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems/einer Netzwerk-Applikation (z. B. eine Blockkette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem/der Netzwerk-Applikation gespeichert sind. Damit lassen sich beispielsweise blocklose (engl. blockless) verteilte Datenbanksysteme/Netzwerk-Applikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems/der Netzwerk-Applikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem/der Netzwerk-Applikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Beispielsweise können zusätzlich zu einer Prüfsumme über die Transaktionen auch eine Prüfsumme über den "State", d.h. die Zustände der Smart-Contracts und/oder der Konten und/oder über die Rückgabewerte der Transaktionen (engl. Transaction Receipts) z. B. in die Transaktion und/oder den Datenblock eingefügt werden.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems/der Netzwerk-Applikation" kann im Zusammenhang mit der Erfindung beispielsweise der Datenblock des verteilten Datenbanksystems/der Netzwerk-Applikation verstanden werden, der insbesondere einem (bestimmten) Datenblock direkt vorhergeht. Alternativ können unter "vorhergehender Datenblöcke eines (bestimmten) Datenblockes des verteilten Datenbanksystems/der Netzwerk-Applikation" insbesondere auch alle Datenblöcke des verteilten Datenbanksystems/der Netzwerk-Applikation verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems/der Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem/der Netzwerk-Applikation (z. B. eine Blockkette) durchführen [1][4][5]. Solche Knoten können beispielsweise Transaktionen eines verteilten Datenbanksystems/einer Netzwerk-Applikation bzw. deren Datenblöcke ausführen oder neue Datenblöcke mit neuen Transaktionen in das verteilte Datenbanksystem/die Netzwerk-Applikation mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem/der Netzwerk-Applikation, eine Knotenprüfsumme (z. B. eine digitale Signatur oder ein Zertifikat) in dem neuen Datenblock speichern. Beider Knotenprüfsumme kann es sich dabei beispielsweise um eine von einem entsprechenden Knoten signierte Prüfsumme z. B. eines Datenblocks oder einer Transaktion handeln. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems/der Netzwerk-Applikation sind. Dabei können die Geräte beispielsweise Feldgeräte sein oder Geräte im Internet der Dinge sein, die insbesondere auch ein Knoten des verteilten Datenbanksystems/der Netzwerk-Applikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise über Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakels löscht). Das Sicherheitsmodul kann dabei beispielsweise kryptographische Schlüssel umfassen, die z. B. für die Signatur der Transaktion und/oder für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Server, die jeweils außerhalb der Blockkette angeordnet sind bzw. kein Teilnehmer des verteilten Datenbanksystems/der Netzwerk-Applikation (z. B. der Blockkette) sind (also keine Operationen mit dem verteilten Datenbanksystem/der Netzwerk-Applikation durchführen oder diese nur abfragen, ohne jedoch Transaktionen durchzuführen, Datenblöcke einzufügen oder Proof-of-Work-Nachweise zu berechnen), verstanden werden. Alternativ kann insbesondere auch unter einem Rechner ein Knoten des verteilten Datenbanksystems/der Netzwerk-Applikation verstanden werden. Mit anderen Worten kann insbesondere unter einem Gerät ein Knoten des verteilten Datenbanksystems/der Netzwerk-Applikation verstanden werden oder auch ein Gerät außerhalb der Blockkette bzw. des verteilten Datenbanksystems/der Netzwerk-Applikation verstanden werden. Ein Gerät außerhalb des verteilten Datenbanksystems/der Netzwerk-Applikation kann beispielsweise auf die Daten (z. B. Transaktionen oder Steuertransaktionen) des verteilten Datenbanksystems/der Netzwerk-Applikation zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems/der Netzwerk-Applikation) durch einen Knoten realisiert, kann dies z. B. mittels eines Smart-Contracts erfolgen, der insbesondere in einer Transaktion des verteilten Datenbanksystems/der Netzwerk-Applikation gespeichert ist. Ein Rechner oder ein Gerät kann beispielsweise auch ein Teil der Infrastruktur sein, die z. B. die Netzwerk-Applikation oder das verteilte Datenbanksystem ausführt, realisiert oder umfasst.

Die Erfindung ist dahingehend vorteilhaft, um eine zuverlässige Ausführung der Transaktionen, welche Beispielsweise auch als Nutztransaktion bezeichnet werden kann, zum richtigen Zeitpunkt zu ermöglichen. Insbesondere können durch die Voraussetzungstransaktion Zeitpunkte zur Ausführung der Nutztransaktionen mittels der Ausführungssteuerungstransaktion vorgegeben werden, indem z. B. diese Zeitpunkte in der Voraussetzungstransaktion gespeichert sind, wobei die Voraussetzungstransaktion z. B. einer bestimmten Transaktion bzw. der Nutztransaktion zugeordnet ist. Damit lassen sich beispielsweise viele Arten von konventionellen Verträgen auf Smart Contracts abbilden. Dies ist z. B. besonders vorteilhaft, wenn mittels des Steuersystems, das z. B. als Netzwerkapplikation realisiert ist, ein digitaler Zwilling für ein Gerät (z. B. ein Fertigungsgerät, eine Gasturbine, ein Feldgerät) realisiert wird. Hierbei kann z. B. das Speichermodul und optional das Zuordnungsmodul z. B. mit Hilfe einer Netzwerk-Applikation oder einer Datenbank den digitalen Zwilling realisieren. Insbesondere können die entsprechenden Nutztransaktionen, die ausgeführt werden sollen, Steuerbefehle umfassen, mit deren Hilfe z. B. das Gerät überwacht und/oder gesteuert wird.

Bei einer ersten Ausführungsform des Steuersystems umfasst ein Datenblock des Steuersystems Transaktionen, die die entsprechenden Anforderungen erfüllen.

Bei weiteren Ausführungsformen des Steuersystems wird mittels der Voraussetzungstransaktion und/oder der Ausführungssteuerungstransaktion ein periodisches Ausführen der Transaktion und/oder einer weiteren Transaktion (z. B. ebenfalls periodisch) zwischen zwei Zeitpunkten gesteuert.

Bei weiteren Ausführungsformen des Steuersystems wird mittels der Voraussetzungstransaktion und/oder der Ausführungssteuerungstransaktion ein periodisches Ausführen der Transaktion und/oder einer weiteren Transaktion mit einer vorgegebenen Periode ab einem vorgegebenen Zeitpunkt gesteuert.

Bei weiteren Ausführungsformen des Steuersystems geben die Voraussetzungstransaktion und/oder die Ausführungssteuerungstransaktion und/oder die Transaktion eine weitere Transaktion zur Ausführung vor.

Bei weiteren Ausführungsformen des Steuersystems geben die Voraussetzungstransaktion und/oder die Ausführungssteuerungstransaktion und/oder die Transaktion einen vorgegebenen Ausführungszeitpunkt für die Ausführung der weiteren Transaktion vor.

Bei weiteren Ausführungsformen des Steuersystems liegt der Ausführungszeitpunkt einer weiteren Transaktion nach einer Ausführung der Transaktion.

Dies ist dahingehend vorteilhaft, um z. B. nach dem Zeitpunkt, nachdem die Ausführung der Transaktion abgeschlossen ist, die weitere Transaktion auszuführen. Diese Ausführung der weiteren Transaktion kann z. B. zusätzlich abhängig von einer erfolgreichen oder nicht erfolgreichen Ausführung der Transaktion sein. Es ist beispielsweise auch denkbar, dass bei einer erfolgreichen Ausführung der Transaktion eine erste weitere Transaktion ausgeführt wird und beispielsweise bei einer nicht erfolgreichen Ausführung eine zweite weitere Transaktion ausgeführt wird. Damit kann beispielsweise flexibel auf das Ergebnis einer Ausführung der Transaktion reagiert werden.

Bei weiteren Ausführungsformen des Steuersystems sind die Voraussetzungstransaktion und/oder die Ausführungssteuerungstransaktion und/oder die Transaktion in einem Datenblock oder mehreren Datenblöcken gespeichert. Alternativ oder zusätzlich ist das Steuersystem beispielsweise ein verteiltes Datenbanksystem. Alternativ oder zusätzlich ist das verteilte Datenbanksystem eine Blockkette. Alternativ oder zusätzlich sind die Voraussetzungstransaktion und/oder die Ausführungssteuerungstransaktion und/oder die Transaktion jeweils Transaktionen, z. B. einer/der Blockkette. Alternativ oder zusätzlich sind die Voraussetzungstransaktion und/oder die Ausführungssteuerungstransaktion und/oder die Transaktion Smart-Contracts.

Bei weiteren Ausführungsformen des Steuersystems geben die Voraussetzungen einen Ausführungszeitpunkt für die Transaktion vor.

Gemäß einem weiteren Aspekt betrifft die Erfindung ein computerimplementiertes Verfahren mit folgenden Verfahrensschritten:
- Speichern von mindestens einer Transaktion und/oder mindestens einer Ausführungssteuerungstransaktion und/oder mindestens einer Voraussetzungstransaktion in einem Speichermodul;
- Zuordnen der Ausführungssteuerungstransaktion und/oder der Voraussetzungstransaktion zu der Transaktion, wobeidie Ausführungssteuerungstransaktion eine Ausführung der Transaktion durch das Steuersystem bei einem Einhalten von Voraussetzungen der Voraussetzungstransaktion steuert.

Bei weiteren Ausführungsformen des Verfahrens umfasst das Verfahren weitere Verfahrensschritte, um die funktionalen Merkmale des Steuersystems zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Steuersystem erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Steuersystem erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

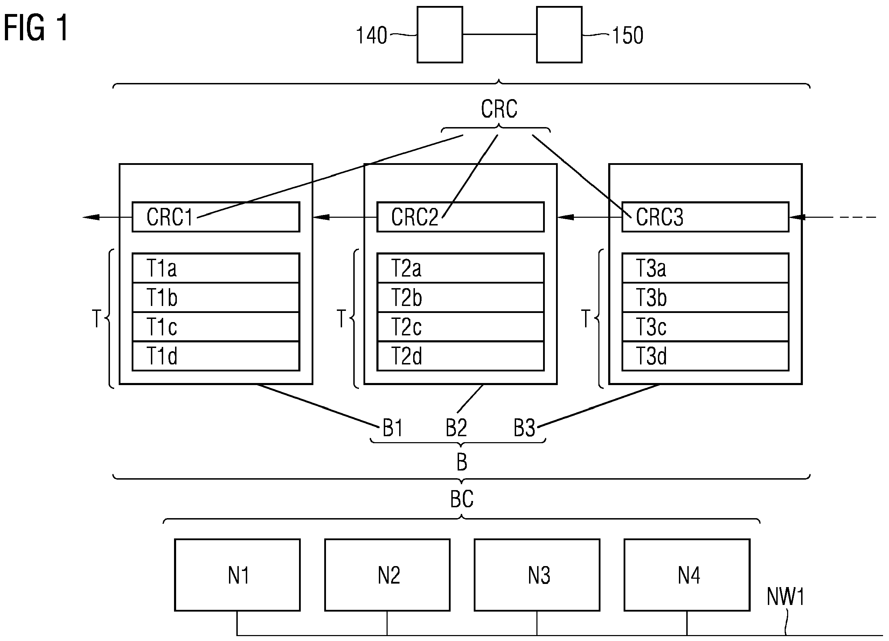

Fig. 1 zeigt ein Steuersystem, das verwendet wird, um beispielsweise die Ausführung von Transaktionen zu steuern. Dieses Steuern kann beispielsweise ein Steuern der Geräte eines Energieverteilungsnetzes sein, ein Steuern der Fertigungsgeräte einer Fertigungsanlage sein oder ein Steuern der Geräte eines Kraftwerks sein.

Das in Fig. 1 gezeigte Steuersystem kann beispielsweise eine Netzwerk-Applikation in Form einer Blockkette oder ein verteiltes Datenbanksystem sein, das mittels einer Blockkette realisiert wird.

Das Steuersystem weist ein Speichermodul 140 und ein Zuordnungsmodul 150 auf. Das Speichermodul 140 ist zum Speichern von mindestens einer Transaktion und/oder mindestens einer Ausführungssteuerungstransaktion und/oder mindestens einer Voraussetzungstransaktion eingerichtet. Das Speichermodul 140 kann noch weitere Transaktionen des verteilten Datenbanksystems bzw. der Blockkette umfassen. In Varianten der Erfindung ist das Speichermodul 140 die Netzwerk-Applikation oder das verteilte Datenbanksystem, das z. B. als Blockkette realisiert ist. In Varianten der Erfindung ist das Speichermodul 140 durch die Netzwerk-Applikation oder durch das verteilte Datenbanksystem realisiert.

Das Zuordnungsmodul 150 ist dazu eingerichtet, der Transaktion die Ausführungssteuerungstransaktion und/oder die Voraussetzungstransaktion zuzuordnen, wobei die Ausführungssteuerungstransaktion eine Ausführung der Transaktion durch das Steuersystem bei einem Einhalten von Voraussetzungen der Voraussetzungstransaktion steuert.

Um Geräte zu steuern, kann die Transaktion beispielsweise Steuerbefehle umfassen, die mit der Transaktion ausgeführt werden, um z. B. ein Gerät zu steuern.

In Fig. 1 sind ein erster Knoten N1, ein zweiter Knoten N2, ein dritter Knoten N3 und ein vierter Knoten N4 gezeigt, die die Knoten der Blockkette BC des verteilten Datenbanksystems beispielshaft bilden, wobei einer der Knoten, z. B. der erste Knoten N1, das Gerät ist, das mittels der Transaktion gesteuert werden soll. Die Knoten sind dabei z. B. über ein erstes Kommunikationsnetzwerk NW1 miteinander verbunden. Das verteilte Datenbanksystem kann zudem noch eine Vielzahl weiterer Knoten umfassen.

Desweiteren zeigt die Fig. 1 Blöcke B, beispielsweise einen ersten Block B1, einen zweiten Block B2 und einen dritten Block B3, der Blockkette BC, wobei hier insbesondere ein Ausschnitt der Blockkette BC exemplarisch gezeigt ist.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten VorgängerBlock gebildet wird. Somit umfasst der erste Block B1 eine erste Verkettungsprüfsumme CRC1 von seinem Vorgängerblock, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten (Knoten N1, N2, N3, N4 und weiteren Blöcken) realisiert. Bei den Knoten kann es sich beispielsweise um Blockkettenorakel oder vertrauenswürdige Knoten handeln.

Die Knoten sind über das Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blockkette repliziert.

Das Speichermodul 140 und/oder das Zuordnungsmodul 150 können z. B. durch Komponenten oder Bauteile der Blockkette (oder der Netzwerkapplikation oder des verteilten Datenbanksystems) realisiert sein, die spezifisch hierfür konfiguriert und/oder gebaut wurden. Beispielsweise können das Speichermodul 140 und/oder das Zuordnungsmodul 150 jeweils durch ein oder mehrere Knoten realisiert sein, die spezifisch für die Funktion konfiguriert wurden. Diese Knoten können beispielsweise Prozessoren z. B. in Form von ASICS sein. Vorzugsweise sind das Speichermodul 140 und/oder das Zuordnungsmodul 150 durch mehrere gleichartig ausgebildeten Knoten realisiert, um z. B. bei einem Ausfall von einem Knoten die Funktionalität des Speichermoduls 140 und/oder des Zuordnungsmoduls 150 aufrecht zu erhalten und den Betrieb des Steuersystems zu gewährleisten.

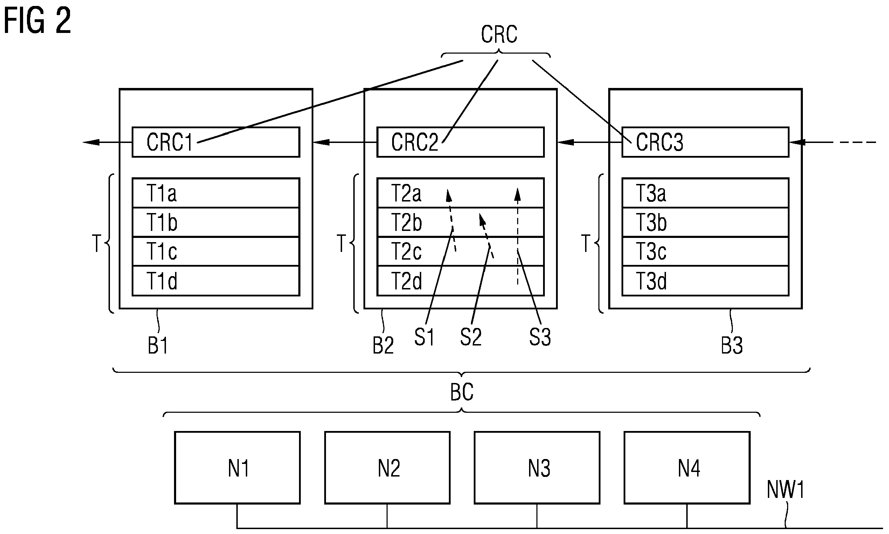

In Fig. 2 ist eine mögliche Implementierung mittels des verteilten Datenbanksystems (z. B. eine Blockkette) oder der Netzwerk-Applikation detaillierter dargestellt. Bei der Transaktion T2a handelt es sich z. B. um die Transaktion, die ausgeführt werden soll. Bei der Transaktion T2b handelt es sich z. B. um die Voraussetzungstransaktion und bei der Transaktion T2c handelt es sich beispielsweise um die Ausführungssteuerungstransaktion.

Die Zuordnung der Ausführungssteuerungstransaktion und/oder der Voraussetzungstransaktion kann beispielsweise dadurch erfolgen, dass die entsprechenden Transaktionen mit der Ausführungssteuerungstransaktion verknüpft werden, wobei diese Verknüpfungsdaten beispielsweise in einer Verknüpfungstransaktion gespeichert werden (S3). Die Verknüpfungstransaktion kann z. B. die Transaktion T2d (oder einer anderen Transaktion wie die Transaktion T3a) sein. Die Verknüpfung kann beispielsweise dadurch erfolgen, dass entsprechende Verknüpfungsdaten in der Verknüpfungstransaktion gespeichert werden. Bei den Verknüpfungsdaten kann es sich beispielsweise um Hashwerte, Adressen oder eindeutige Identifizierer (z. B. eine UID) der entsprechenden Transaktionen handeln, wobei die Transaktionen ggf. entsprechende Daten wie z. B. einen entsprechenden eindeutigen Identifizierer umfassen.

Die Ausführungssteuerungstransaktion wird beispielsweise als Smart-Contract oder als Chain-Code durch die Blockkette ausgeführt und kann beispielsweise über einen Zugriff auf die Voraussetzungstransaktion (hierzu wird die Voraussetzungstransaktion z. B. von der Ausführungssteuerungstransaktion ausgelesen) einen Ausführungszeitpunkt für die Transaktion T2a laden (S2).

Die Ausführungstransaktion überprüft nun die Voraussetzung in Form eines Ausführungszeitpunktes, indem beispielsweise von einem Blockkettenorakel die aktuelle Uhrzeit z. B. in einem Intervall von 10 Sekunden abgefragt wird. Ist der Ausführungszeitpunkt erreicht, wird die Transaktion T2a von der Ausführungstransaktion T2c ausgeführt (S1).

Es ist beispielsweise in Varianten auch möglich, dass die Voraussetzungstransaktion und/oder die Verknüpfungstransaktion in der Ausführungstransaktion gespeichert sind. Hierbei wird die Ausführungstransaktion (direkt) der Transaktion T2a zugeordnet, ohne dass eine komplexere Datenhaltung erforderlich ist.

Alternativ können hierzu z. B. auch die Daten der Voraussetzungstransaktion und/oder der Verknüpfungstransaktion in der Ausführungstransaktion gespeichert werden.

Mittels der Erfindung wird beispielsweise das Problem des automatischen Ausführens von Smart Contracts durch das Steuersystem dadurch gelöst, dass es auf dem Steuersystem Ausführungstransaktionen gibt, die das automatische Ausführen anderer Transaktionen ("terminierte Transaktionen") zu einem oder mehreren vorher festgelegten Zeitpunkt(en) veranlassen. Das Steuersystem umfasst dabei beispielsweise einen Distributed Ledger, eine Netzwerk-Applikation oder ein verteiltes Datenbanksystem oder das Steuersystem ist ein Distributed Ledger, eine Netzwerk-Applikation oder ein verteiltes Datenbanksystem.

Es kann bei dem Steuersystem Instanzen geben, die die Gültigkeit der Transaktionen überprüfen. Diese Instanzen können z. B. spezielle Knoten oder Smart-Contracts sein. Dies kann z. B. auch durch das Speichermodul 140 und/oder das Zuordnungsmodul 150 realisiert werden bzw. die Instanzen sind das Speichermodul 140 und/oder das Zuordnungsmodul 150.

Die Aufgabe dieser Instanzen ist es z. B., Transaktionen (z. B. Voraussetzungstransaktionen) mit vorgegeben Ausführungszeitpunkt zu speichern und beim Erreichen des Zeitpunkts zur Ausführung zu bringen. Diese Ausführung geschieht dabei beispielsweise nur, sofern sie noch gemäß der Regeln des Distributed Ledgers bzw. Steuersystems möglich ist. Die Ausführung wird dabei beispielsweise von den Ausführungstransaktionen gesteuert.

Die terminierte Transaktion erfolgt beispielsweise nur, wenn sich ausreichend Guthaben in der sendenden Adresse befindet. Auch dies wird von z. B. der Ausführungstransaktionen überprüft und das für die Ausführung erforderliche Guthaben ist z. B. ebenfalls in der entsprechenden Voraussetzungstransaktion gespeichert.

Bei auf Proof of Work basierten Distributed Ledgers sind die für die Überprüfung der Transaktionen zuständige Instanzen bzw. Knoten die Miner. Dementsprechend wären für die Speicherung und Ausführung der Transaktionen zum gegebenen Zeitpunkt auf einem Distributed Ledger, der auf Proof of Work beruht, die Miner zuständig. Ein neuer Block gilt hierbei nur als Protokollkonform, wenn er alle ausführbaren terminierten Transaktionen enthält.

In einer weiteren Variante des Steuersystems kann der Urheber der Transaktion, die das automatische Ausführen anderer Transaktionen zu einem oder mehreren vorher festgelegten Zeitpunkt veranlasst, die Ausführung von solchen noch nicht ausgeführten Transaktionen widerrufen, so dass diese nicht ausgeführt werden.

In einer weiteren Variante des Steuersystems kann eine wiederholte Ausführung von Transaktionen zu vorgegebenen Zeitpunkten dadurch realisiert werden, dass als Teil einer Transaktion zu einem vorgegebenen Zeitpunkt eine weitere Transaktion zu einem anderen, späteren vorgegebenen Zeitpunkt veranlasst wird.

In einer weiteren Variante des Steuersystems wird mittels der Voraussetzungstransaktion und/oder der Ausführungstransaktionen festgelegt, welche Abweichungen des Ausführungszeitpunkt der Transaktion vom vorher festgelegten Zeitpunkt bei der Überprüfung der Transaktionen toleriert wird. Damit werden beispielsweise nachfolgende Probleme vermieden:
Es wird vermieden, die aus der notwendigerweise nicht perfekten Synchronizität verschiedener Knoten des Distributed Ledgers herrühren, und solche, die von der Granularität der Ausführungszeitpunkte von Transaktionen verursacht werden.

Das Steuersystem kann beispielsweise zusätzlich noch eine weitere Komponente oder mehrere weitere Komponenten umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

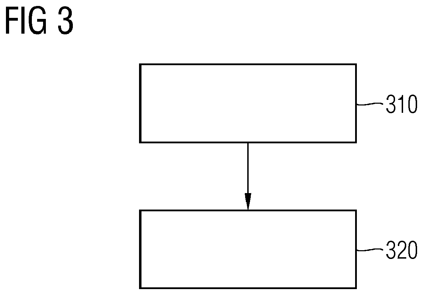

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Ausführen Transaktionen gezeigt.

Das Verfahren umfasst einen ersten Verfahrensschritt 310 zum Speichern von mindestens einer Transaktion und/oder mindestens einer Ausführungssteuerungstransaktion und/oder mindestens einer Voraussetzungstransaktion in einem Speichermodul.

Das Verfahren umfasst einen zweiten Verfahrensschritt 320 zum Zuordnen der Ausführungssteuerungstransaktion und/oder der Voraussetzungstransaktion zu der Transaktion, wobei
die Ausführungssteuerungstransaktion eine Ausführung der Transaktion durch das Steuersystem bei einem Einhalten von Voraussetzungen der Voraussetzungstransaktion steuert.

Mittels des Steuersystems kann beispielsweise die Ausführung von Smart-Contracts in Blockketten verbessert werden.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

## Patentansprüche

1. Steuersystem aufweisend:
- ein Speichermodul, wobei
∘ das Speichermodul zum Speichern von mindestens einer Transaktion und/oder mindestens einer Ausführungssteuerungstransaktion und/oder mindestens einer Voraussetzungstransaktion eingerichtet ist;
- ein Zuordnungsmodul, wobei
∘ das Zuordnungsmodul dazu eingerichtet ist, der Transaktion die Ausführungssteuerungstransaktion und/oder die Voraussetzungstransaktion zuzuordnen,
∘ die Ausführungssteuerungstransaktion eine Ausführung der Transaktion durch das Steuersystem bei einem Einhalten von Voraussetzungen der Voraussetzungstransaktion steuert.

2. Steuersystem nach einem der vorhergehenden Ansprüche, wobei
- ein Datenblock des Steuersystems Transaktionen umfasst, die die entsprechenden Anforderungen erfüllen.

3. Steuersystem nach einem der vorhergehenden Ansprüche, wobei
- mittels der Voraussetzungstransaktion und/oder der Ausführungssteuerungstransaktion ein periodisches Ausführen der Transaktion und/oder einer weiteren Transaktion zwischen zwei Zeitpunkten gesteuert wird.

4. Steuersystem nach einem der Ansprüche 1 oder 2, wobei
- mittels der Voraussetzungstransaktion und/oder der Ausführungssteuerungstransaktion ein periodisches Ausführen der Transaktion und/oder einer weiteren Transaktion mit einer vorgegebenen Periode ab einem vorgegebenen Zeitpunkt gesteuert wird.

5. Steuersystem nach einem der vorhergehenden Ansprüche, wobei
- die Voraussetzungstransaktion und/oder die Ausführungssteuerungstransaktion und/oder die Transaktion eine weitere Transaktion zur Ausführung vorgeben.

6. Steuersystem nach Anspruch 5, wobei die Voraussetzungstransaktion und/oder die Ausführungssteuerungstransaktion und/oder die Transaktion einen vorgegebenen Ausführungszeitpunkt für die Ausführung der weiteren Transaktion vorgeben.

7. Steuersystem nach Anspruch 5 oder 6, wobei der Ausführungszeitpunkt nach einer Ausführung der Transaktion liegt.

8. Steuersystem nach einem der vorhergehenden Ansprüche, wobei
- die Voraussetzungstransaktion und/oder die Ausführungssteuerungstransaktion und/oder die Transaktion in einem Datenblock oder mehreren Datenblöcken gespeichert sind, und/oder
- das Steuersystem beispielsweise ein verteiltes Datenbanksystem ist, und/oder
- das verteilte Datenbanksystem eine Blockkette ist, und/oder
- die Voraussetzungstransaktion und/oder die Ausführungssteuerungstransaktion und/oder die Transaktion jeweils Transaktionen z. B. der Blockkette sind, und/oder
- die Voraussetzungstransaktion und/oder die Ausführungssteuerungstransaktion und/oder die Transaktion Smart-Contracts sind.

9. Steuersystem nach einem der vorhergehenden Ansprüche, wobei die Voraussetzungen einen Ausführungszeitpunkt für die Transaktion vorgeben.

10. Computerimplementiertes Verfahren mit folgenden Verfahrensschritten:
- Speichern von mindestens einer Transaktion und/oder mindestens einer Ausführungssteuerungstransaktion und/oder mindestens einer Voraussetzungstransaktion in einem Speichermodul;
- Zuordnen der Ausführungssteuerungstransaktion und/oder der Voraussetzungstransaktion zu der Transaktion, wobei die Ausführungssteuerungstransaktion eine Ausführung der Transaktion durch das Steuersystem bei einem Einhalten von Voraussetzungen der Voraussetzungstransaktion steuert.

11. Computerprogrammprodukt mit Programmbefehlen zur Durchführung des Verfahrens nach Anspruch 10.

12. Bereitstellungsvorrichtung für das Computerprogrammprodukt nach Anspruch 11, wobei die Bereitstellungsvorrichtung das Computerprogrammprodukt speichert und/oder bereitstellt.
